Europäisches Patentamt

European Patent Office

Office européen des brevets

(11) Publication number: **0 068 175**
**B1**

# EUROPEAN PATENT SPECIFICATION

(45) Date of publication of patent specification: **30.04.86**

(51) Int. Cl.⁴: **G 02 B 6/06**

(21) Application number: **82104931.9**

(22) Date of filing: **04.06.82**

(60) Publication number of the earlier application in accordance with Art. 76 EPC: **0 068 175**

(54) Image conducting fiber device.

(30) Priority: **18.06.81 JP 92966/81**
**24.07.81 JP 116053/81**
**31.07.81 JP 119279/81**

(43) Date of publication of application:
**05.01.83 Bulletin 83/01**

(45) Publication of the grant of the patent:
**30.04.86 Bulletin 86/18**

(84) Designated Contracting States:
**DE FR GB IT NL**

(56) References cited:
**GB-A-1 219 597**
**US-A-3 436 142**
**US-A-3 797 910**
**US-A-4 153 333**

**IBM TECHNICAL DISCLOSURE BULLETIN,
vol.22, no.1, June 1979, L.D. THORP: "Triplet
lens", page 242**

(73) Proprietor: **SUMITOMO ELECTRIC INDUSTRIES
LIMITED**
**No. 15, Kitahama 5-chome Higashi-ku
Osaka-shi Osaka 541 (JP)**

(72) Inventor: **Yoshida, Kenichi c/o Osaka Works
Sumitomo Elect. Ind. Ltd. No. 1-3 Shimaya
1-chome
Konohana-ku Osaka (JP)**
Inventor: **Ono, Kimizo c/o Osaka Works
Sumitomo Elect. Ind. Ltd. No. 1-3 Shimaya
1-chome
Konohana-ku Osaka (JP)**
Inventor: **Tsuno, Koichi c/o Osaka Works
Sumitomo Elect. Ind. Ltd. No. 1-3, Shimaya
1-chome
Konohana-ku Osaka (JP)**
Inventor: **Nishikawa, Mitsuru
Sumitomo Elect. Ind. Ltd. No. 1-3, Shimaya
1-chome
Konohana-ku Osaka (JP)**

(74) Representative: **Hänzel, Wolfgang, Dipl.-Ing.
et al
Henkel, Kern, Feiler & Hänzel Patentanwälte
Möhlstrasse 37
D-8000 München 80 (DE)**

Courier Press, Leamington Spa, England.

# Description

The present invention relates to an image conducting fiber device and a method for producing the same, said device comprising a plurality of individual optical fibers bundled together in side-by-side relation, each fiber consisting of a core having a higher refractive index and an encircling, non-absorbing cladding having a lower refractive index, and light absorbing means surrounding said non-absorbing cladding.

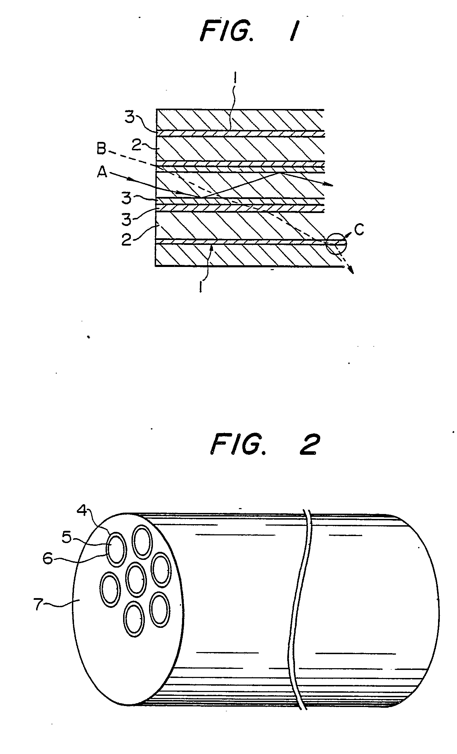

One prior art image transmission path is formed of individual optical fibers bundled together in side-by-side relation, each fiber serving as a picture element and consisting of a core having a higher refractive index and a surrounding cladding having a lower refractive index. An enlarged view of the transmission end of this type of image transmission path is shown in fig. 1, wherein an individual optical fiber 1 consists of a core 2 and cladding 3. Due to the difference in refractive index between the core and cladding, light A input to the core is totally reflected a great many times at the interface between the core and cladding before reaching the receiving end of the fiber. But light B impinging upon the cladding becomes a leaky mode, and as it is reflected or scattered at various interfaces in the interior of the transmission path, it is carried over to the receiving end as noise light C, providing only a low-contrast image at that end.

Moreover, the cladding that insulates two adjacent optical fibers is usually made of a glass material having fairly high light transmissivity, so crosstalk sometimes occurs between the fibers. If the diameter of each fiber and the distance between adjacent fibers are as small as the wavelength of the light, a significantly large energy is transmitted by the light that travels outside the fibers. The occurrence of crosstalk becomes more conspicuous as the difference in refractive index between the core and cladding is decreased, and this gain reduces the contrast of the image transmitted to the receiving end. There have been proposed many image fiber devices wherein the difference in refractive index between the core and cladding is 4% or less of the refractive index of the core, but no great attention has been paid to the ratio of illumation through one core that crosses through to the next adjacent one, although this ratio is a factor that determines the contrast of the image transmitted to the receiving end. This is mainly because in the early state of their development, image fibers were most frequently used only for the purpose of viewing objects. Recently, however, they have come to be used for pattern recognition and size measurement, and an image fiber that can transmit a high-contrast image suitable for these purposes is demanded.

In US—A—3 797 910, an image transmission path as described initially is disclosed. In the fiber optic device shown in this document, the cladding material of some of the fibers is formed of a light-absorbing material, whereas the remaining fibers are provided with a cladding material which is substantially completely transparent, i.e., it has a very low absorption coefficient. Thus, different fibers have to be fabricated and secured together in a side-by-side relation. For this purpose, a difficult and expensive fabrication method is necessary in order to get an alternating arrangement of the different fibers.

In GB—A—1 219 597, a fiber optic device is disclosed in which small fibers of blank absorbing glass are provided in the interstices of a regular array of larger clad fibers. In another embodiment of the device shown in this document, an overall absorbing coating is provided around the outside of each clad fiber. The so-called "extra-mural absorbing", described in this document, has the disadvantage that it reduces the packing fraction of the image-transfer device since two layers of cladding are required, i.e., the ratio of the core glass area to the area of the entire device is reduced and therefore the amount of light which can be transferred by the plate is also reduced. Moreover, such fiber optic devices are quite difficult to fabricate.

It is a main object of the present invention to provide an image transmission path of the kind mentioned initially by which crosstalk can be substantially eliminated and which can be fabricated in a simple manner.

According to the present invention, this object is achieved by an image conducting fiber device as characterized in claim 1.

A method for producing an image transmission path is described in claim 2.

In an embodiment of the present invention, which meets the criterion of the first object above, an image fiber is produced by forming a bundle of optical fibers made of a glassy or vitreous material which is optically stable against γ-radiation, filling the gap between individual fibers with a glassy material that easily changes its color upon exposure to γ-radiation, and illuminating the resulting image fiber device with said radiation to cause a color change in the glassy material between the fibers to thereby form a light absorbing section.

The image fiber device according to one embodiment of the present invention is shown in fig. 2, wherein the reference numeral 4 indicates an optical fiber, 5 is the core, 6 is the cladding and 7 is the light absorbing section. The core 5 and cladding 6 of the optical fiber 4 are generally made of glassy material such as quartz glass which is optically stable against radiation. The optical fiber 4 has a relatively large diameter. The light absorbing section 7 is made of a glassy material such as dense flint glass or germanium-doped glass that easily changes its color upon exposure to γ-radiation. These materials have high refractive index, which further increases the effectiveness of the light absorbing section formed of these materials.

The image fiber device of the present invention is produced by the following method. A number of fine wires of fibers of a glassy material that easily changes its color upon exposure to γ-radiation are intermingled with a number of coarse optical fibers 4, and the blend is put in a glass tube that later serves as a jacket and is drawn with heat to a given length of image fiber device, in which the molten wires or fibers of the glassy material completely fill the gaps between individual fibers 4. Both the optical fibers 4 and the encircling absorber 7 are made of a glassy material and have similar chemical and physical properties, so only a minimum strain develops during the manufacturing process (heating, growing and drawing), and hence there is little chance of damage or segregation among the optical fibers. The image fiber device is then exposed to gamma-rays to cause a color change in the glassy material between the optical fibers 4 to thereby form a light absorbing section 7. The degree of the change in color of the absorber 7 can be varied by controlling the amount of the radition to which the image fiber device is exposed. In this embodiment, the color changing glassy material is provided between the optical fibers 4 by intermingling them with the glassy material in the form of fine wire or fibers, but it is to be understood that any other suitable method can be used to achieve the stated objective.

**Claims**

1. An image conducting fiber device comprising:

a plurality of individual optical fibers (4) bundled together in side-by-side relation, each fiber consisting of a core (5) having a higher refractive index and an encircling non-absorbing cladding (6) having a lower refractive index, and a light absorbing means (7) surrounding said non-absorbing cladding (6),

characterized in that said light absorbing means is formed of a glassy material (7) which changes its color upon exposure to radiation having the effect of γ-radiation.

2. A method of producing an image conducting fiber device comprising providing a plurality of optical fibers (4) which are optically stable against radiation having the effect of γ-radiation, providing a glassy material (7) which changes color when irradiated by said radiation, assembling said optical fibers (4) and said glassy material (7) to form a blend, heating said blend to melt said glassy material (7) such that the melt fills the gaps between adjacent optical fibers (4), and irradiating the resultant device by said radiation to change the color of said glassy material (7) to form a light absorbing section.

**Revendications**

1. Dispositif à fibres de transport d'images, comprenant:

plusieurs fibres optiques (4) distinctes liées ensemble côte à côte, chaque fibre étant constituée d'une âme (5) possédant un indice de réfraction plus élevé et d'un revêtement (6) non absorbant qui l'entoure possédant un indice de réfraction plus bas, ainsi que d'un moyen (7) d'absorption de lumière entourant ledit revêtement (6) non absorbant, caractérisé en ce que ledit moyen absorbant la lumière est formé d'un matériau vitreux (7) qui change de couleur lorsqu'on l'expose à des rayonnements possédant l'effet du rayonnement γ.

2. Procédé de production d'un dispositif à fibres de transport d'images, qui consiste à prévoir plusieurs fibres optiques (4) qui sont optiquement stables vis à vis des rayonnements ayant l'effet du rayonnement γ, à prévoir un matériau vitreux (7) qui change de couleur lorsqu'il est illuminé par lesdits rayonnements, à assembler lesdites fibres optiques (4) et ledit matériau vitreux (7) afin de former un mélange, à chauffer ledit mélange pour faire fondre ledit matériau vitreux (7) de façon que la matière fondue remplisse les intervalles existant entre fibres optiques (4) adjacentes, et à illuminer le dispositif résultant au moyen desdits rayonnements pour faire changer de couleur ledit matériau vitreux (7) et ainsi former une section d'absorption de lumière.

**Patentansprüche**

1. Bildübertragende Faser(bündel)vorrichtung, umfassend eine Vielzahl von einzelnen, nebeneinander liegend gebündelten optischen Fasern oder Lichtleitfasern (4) aus jeweils einem Kern (5) eines höheren Brechungsindex und einem umschließenden, nicht-absorbierenden Überzug (6) eines niedrigeren Brechungsindex sowie eine den nicht-absorbierenden Überzug (6) umgebende lichtabsorbierende Einrichtung (7), dadurch gekennzeichnet, daß die lichtabsorbierende Einrichtung aus einem glasartigen Werkstoff (7) geformt ist, der bei Belichtung mit Strahlung der Wirkung von γ-Strahlung seine Farbe wechselt.

2. Verfahren zur Herstellung einer bildübertragenden Faser(bündel)vorrichtung, dadurch gekennzeichnet, daß eine Vielzahl von optischen Fasern oder Lichtleitfasern (4), die gegenüber Strahlung mit der Wirkung von γ-Strahlung optisch stabil sind, vorgesehen werden, ein glasartiger Werkstoff (7), der bei Bestrahlung mit dieser Strahlung seine Farbe wechselt, bereitgestellt wird, die Lichtleitfasern (4) und der glasartige Werkstoff (7) zu einem Gemenge oder Verbund zusammengefügt werden, das Gemenge oder der Verbund zum Schmelzen des glasartigen Werkstoffs (7) erwärmt wird, so daß die Schmelze die Zwischenräume zwischen benachbarten Lichtleitfasern (4) ausfüllt, und die resultierende Vorrichtung mit der genannten Strahlung bestrahlt wird, um die Farbe des glasartigen Werkstoffs (7) zur Bildung eines lichtabsorbierenden Abschnitts zu verändern.

## FIG. 1

## FIG. 2